# DEMANDE DE BREVET EUROPEEN

(11) **EP 4 345 075 A1**
(43) Date de publication de la demande: **03.04.2024**
(21) Numéro de dépôt: 22306445.2
(22) Date de dépôt: 29.09.2022
(51) Int. Cl.: C03C 3/078, C03C 3/095, C03C 4/00

(54) **COMPOSITION DE CRISTAL SANS PLOMB, VERRE ET ARTICLE EN VERRE A BASE DE CETTE COMPOSITION**

(71) Demandeur: Baccarat, 54120 Baccarat (FR)
(72) Inventeur: COILLOT, Daniel, 54230 NEUVES-MAISONS (FR); BRIENT, Eric, 88100 RAON L'ETAPE (FR)
(74) Mandataire: Kessler, Marc

(57) **Abrégé**

La présente invention se rapporte à une composition de verre de cristal sans plomb comprenant 58 à 64% en poids de SiO₂, 0 à 0,5% en poids de Al₂O₃, un mélange d'oxydes d'alcalins et d'alcalino-terreux consistant en 13,8 et 18 % en poids d'un mélange d'oxydes d'alcalins consistant en K₂O et Na₂O, et 9 et 15 % en poids d'un mélange d'oxydes d'alcalino-terreux consistant en BaO et SrO, le rapport entre le pourcentage molaire du mélange d'oxydes d'alcalins et le pourcentage molaires du mélange d'oxydes d'alcalino-terreux étant compris entre environ 2 et environ 3, 6 à 10% en poids de ZnO, 0 à 1,20% en poids de Sb₂O₃, 0 à 0,5% en poids de SO₃, 0 à 6,8% en poids de TiO₂ et 0 à 6% en poids de La₂₃ et 0 à 10% d'agents colorants. Elle porte également sur un verre à base de cette composition et sur un article fait ou comprenant un tel verre.

## Description

### Objet de l'invention

La présente invention concerne une composition de verre de cristal ne contenant substantiellement pas de Plomb, mais dont le verre, obtenu à partir de cette composition, et les articles composés de ce verre, possèdent des propriétés et caractéristiques identiques ou similaires au verre de cristal au Plomb.

### Etat de la technique

Les articles en verre de cristal au Plomb, qu'ils soient des articles des arts de la table, de décoration, des luminaires ou des bijoux, sont couramment réalisés à partir de compositions comprenant une base vitreuse et au moins une proportion significative d'oxyde de Plomb, qui est généralement supérieure à 24 % ou à 30% en poids du poids total de la composition.

Habituellement, ils sont obtenu par une étape de fusion des constituants des compositions, habituellement également en présence de verre de cristal au Plomb à recycler, dans des fours de fusion à coulée continue, ou four à bassin, ou des fours à coulée discontinue, ou fours à pot(s), puis par la mise en œuvre d'étapes de travail, de formage, à chaud, pour former les articles, qui subissent ensuite des étapes de travail à froid, ou d'usinage, qui consistent généralement en une ou plusieurs étapes de sciage, flettage, taille, perçage, forage, polissage mécanique, ou des combinaisons quelconques de ces étapes. Habituellement, les articles sont soumis également une étape de polissage acide, réalisée à l'aide d'un mélange d'acide fluoridrique (HF) et d'acide sulfurique (H₂SO₄), puis un rinçage des sels résiduels. Des étapes de finition, ou parachèvement, peuvent enfin être réalisées afin, par exemple d'appliquer un décor en surface des articles.

Les proportions de Plomb, employées dans les compositions de verre de cristal au Plomb, permettent de réduire leur température de fusion et leur température de travail, par rapport à une composition qui ne comprendrait pas de Plomb. Elles permettent d'augmenter leur malléabilité et d'obtenir une viscosité rendant possible le façonnage du cristal dans une gamme de températures allant de 600°C jusqu'à 1200°C. Elles permettent également de procurer au verre en cristal au Plomb une tendreté le rendant facile à polir, à graver ou tailler à froid, et lui procure un éclat, une densité et une sonorité particuliers, une excellente durabilité chimique caractérisée par une bonne résistance hydrolytique, qui sont caractéristiques du cristal au Plomb.

Néanmoins, parce que le Plomb est toxique, et parce qu'il existe un risque qu'il migre vers les produits qui seraient au contact d'un verre en cristal, il a été proposé des compostions de cristal, dites « *alternatives* », ayant un pourcentage d'oxyde de Plomb réduit, ou bien des compositions dites « *de cristal sans Plomb ».*

Ces compositions alternatives de cristal sans Plomb comprennent généralement une base vitreuse, pouvant être à base de Silice (SiO₂) pour un verre silicate, à base de Silice et d'oxyde d'Aluminium (Al₂O₃) pour un verre aluminosilicate, ou bien encore de Silice, d'oxyde d'Aluminium et d'oxyde de Bore (B₂O₃) pour un verre alumino-boro-silicate, et un ensemble de composants modificateurs de la base vitreuse, des additifs particuliers, comme par exemple un ou plusieurs fondants, stabilisants, agents d'affinage, et éventuellement un ensemble de composants colorants ou décolorants, permettant d'approcher, ou de reproduire, les propriétés et les caractéristiques d'une composition de cristal et d'un verre de cristal au Plomb, en particulier en termes de façonnage, donc de viscosité à chaud, de densité, d'indice de réfraction et de sonorité.

Par exemple, le document US6235667 décrit une composition d'un verre silicate ou aluminosilicate, ayant une densité supérieure à 2,9 g/cm³ et un indice de réfraction supérieur à 1,545, qui ne comprend pas de Plomb, et qui est adaptée à la fabrication d'articles manufacturés d'art de la table et/ou de cristallerie décorative. La composition comprend, en pourcentage en poids, 50 et 58% de SiO₂ et 0 à 3% d'Al₂O₃, dans laquelle le Plomb a été remplacé par un mélange de Zinc, de Baryum, de Lanthane, de Niobium et de Bismuth représentant entre 26 % à 33 % en poids, l'oxyde de Zinc étant compris entre 16 et 30% en poids, la teneur en oxydes de Baryum et de Bismuth étant chacun de 0 à 13% en poids, la somme de ces oxydes hors Zinc étant entre 7 et 14%. La composition comprend en outre 12 à 18% en poids d'oxydes de Potassium, de Sodium et de Lithium, un ou plusieurs des composants choisis parmi Sb₂O₃, As₂O₃, NiO, CoO, MnO₂, Er₂O₃, Nd₂O₃, SeO et CeO₂ en tant qu'agents d'affinage et de décoloration, en une quantité totale inférieure à 2% en poids, et Sb₂O₃ représentant 0 à 1% en poids, et peut comprendre de l'oxyde de Zirconium, d'Yttrium et du Titane à une teneur totale combinée inférieure à 6% en poids.

Le document EP1725502 décrit une composition d'un cristal sans Plomb, ni Baryum, qui est un verre alumino-boro-silicate, ayant un indice de réfraction d'au moins 1,55. La composition comprend, en poids, 50 à 60% de SiO₂, 0,6 à 4% de B₂O₃, 0,25 à 5% de Al₂O₃, 0 à 3 % de K₂O, 12 à 15% de Na₂O, 4 à 11% de CaO, 0 à 2% de MgO, 0 à 5% de TiO₂, 8 à 16 % de ZnO, avec la teneur totale en oxydes de Pb, Ba, As inférieure à 0,1 %, la teneur totale en oxydes de Ti et de La en dessous de 5%, la teneur totale en oxydes de Nb, Ta, Yb, Y, W, Bi, Zr en dessous de 5 %, avec moins de 1% de chaque oxyde Nb, Ta, Yb et moins de 3% de chaque oxyde Y, W, Bi, Zr.

Le document CN105837045 décrit une composition d'un verre, qui peut être un silicate, un borosilicate ou un aluminosilicate, sans Plomb, ni Baryum, ayant un indice de réfraction supérieur ou égal à 1,545 et une densité supérieure ou égale à 2.9 g/cm³, pour la confection d'articles des aux arts de la table. La composition comprend, en poids, 50 à 65% SiO₂, 0 à 5% Al₂O₃, 0 à 5% B₂O₃, 0 à 3% Li₂O, 0 à 15% Na₂O, 0 à 10% K₂O, 0 à 10% La₂O₃, 0 à 15% SrO et ZnO étant supérieur ou égal à 8% mais inférieur à 16%.

Même si de telles compostions de verre de cristal sans Plomb permettent d'obtenir un verre ayant une densité et un indice de réfraction qui sont équivalents à ceux d'un verre de cristal au Plomb, elles présentent de nombreux inconvénients lors de leur fusion et des étapes ultérieures de fabrication des articles. Les compositions peuvent présenter un phénomène de cristallisation lors du travail à chaud. En outre, lors du formage des articles à chaud la matière fondue n'est pas, ou peu, adaptée à fabrication des grosses pièces, par exemple entre 1 kg et 50 kg, ou des pièces avec des formes complexes. Par ailleurs, les compositions comprenant de l'oxyde de Bore et/ou de l'oxyde de Bismuth, et des teneurs importantes en oxydes d'alcalins, notamment en oxyde de Lithium, interagissent fortement, à haute température, avec les éléments réfractaires constituant les fours dans lesquels l'étape de fusion est réalisée. Cela a pour conséquence une usure prématurée de ces éléments réfractaires, entrainant une diminution de la durée de vie des fours et potentiellement des colorations parasites du verre.

### Buts de l'invention

La présente invention vise à fournir une composition de verre de cristal ne contenant substantiellement pas de Plomb, un verre de cristal substantiellement sans Plomb et un article à base d'un tel verre, qui ne présentent pas les inconvénients de l'état de la technique.

La présente invention vise à fournir une alternative aux solutions de l'état de la technique existantes.

La présente invention vise à fournir une composition présentant une mise en œuvre facilité et permettant un façonnage amélioré à des températures de travail similaires à celles d'une composition de verre de cristal au Plomb, et conférant au verre obtenu à partir de la composition, et à l'article à base de ce verre, des caractéristiques et propriétés similaires ou identiques à celle d'un verre ou d'un article en verre de cristal au Plomb.

La présente invention porte également sur l'utilisation de la composition selon l'invention pour la réalisation d'un verre de cristal sans Plomb et d'un article en verre de cristal sans Plomb, ne contenant substantiellement pas de Plomb.

### Résumé de l'invention

La présente invention porte sur une composition de verre de cristal sans Plomb comprenant 58 à 64% en poids de SiO₂, 0 à 0,5% en poids de Al₂O₃, un mélange d'oxydes d'alcalins et d'alcalino-terreux consistant en : 13,8 à 18 % en poids d'un mélange d'oxydes d'alcalins consistant en K₂O et Na₂O, et 9 à 15 % en poids d'un mélange d'oxydes d'alcalino-terreux consistant en BaO et SrO, le rapport entre le pourcentage molaire du mélange d'oxydes d'alcalins et le pourcentage molaires du mélange d'oxydes d'alcalino-terreux étant compris entre environ 2 et environ 3, 6 à 10% en poids de ZnO, 0 à 1,20% en poids de Sb₂O₃, 0 à 0,5% en poids de SO₃, 0 à 6,8% en poids de TiO₂ et 0 à 6% en poids de La₂O₃ et 0 à 10% d'agents colorants ou décolorants.

Selon des modes particuliers de l'invention, la composition selon l'invention comprend au moins une, ou une combinaison quelconque appropriée, des caractéristiques suivantes :
- le mélange d'oxydes d'alcalins consiste en 8 à 10% en poids de K₂O et 5,8 à 8% en poids de Na₂O,
- le mélange d'oxydes d'alcalino-terreux consiste en 8,5 à 12% en poids de BaO et 0,5 à 3% en poids de SrO,
- le rapport entre le pourcentage molaire du mélange d'oxydes d'alcalins et le pourcentage molaire du mélange d'oxydes d'alcalino-terreux est égal à environ 2,
- le pourcentage molaire du mélange d'oxydes d'alcalins et le pourcentage molaire du mélange d'oxydes d'alcalino-terreux est égal à environ 2,5,

La présente invention porte aussi sur l'utilisation de la composition selon l'invention pour la réalisation d'un verre de cristal sans Plomb.

La présente invention porte également sur un verre en cristal sans Plomb à base de la composition, qui, de préférence, présente un indice de réfraction compris entre 1,537 et 1,559 et une densité comprise entre 2,77 et 3,03.

La présente invention porte de plus sur l'utilisation du verre de cristal sans Plomb selon l'invention pour la réalisation d'un article en verre de cristal sans Plomb.

La présente invention porte aussi sur un article en cristal sans Plomb fait, ou comprenant, le verre selon l'invention, qui, dans des modes de réalisation particuliers est un article des arts de la table, un article de décoration, un bijou, un élément d'un luminaire ou un luminaire.

### Description détaillée de l'invention

Dans la suite de la description et les revendications, les termes « pourcentage en poids » signifient que le pourcentage indiqué pour un composant est rapporté à la masse totale de la composition, et de même, les termes « pourcentage en mole » signifient que le pourcentage indiqué est rapporté au nombre total de moles de la composition. Les termes « trace(s) » ou « impureté(s) » signifient que le composé, dont il est question, se trouve à une portion inférieure ou égale à 0,05 % en poids.

La composition selon l'invention est une composition de verre dit « de cristal sans Plomb », car le verre à base de, obtenu à partir de, cette composition possède des propriétés et des caractéristiques identiques ou similaires à celles d'un verre de cristal au Plomb, mais sans comprendre substantiellement de Plomb.

La composition selon l'invention ne comprend pas substantiellement d'oxyde de Plomb, mais présente des propriétés et des caractéristiques identiques, similaires ou voisines, à celles d'une composition de verre de cristal au Plomb, notamment en termes de possibilité, pour la composition, d'être fondue et affinée dans les conditions opératoires, en particulier de températures, habituellement utilisées pour un cristal au Plomb, et avec les mêmes moyens, mais également en termes d'aptitude au travail à la main pour l'obtention d'articles pressés et soufflés, et d'aptitude au façonnage à froid voisine de celle du cristal au Plomb.

La composition selon l'invention comprend une base vitreuse comprenant de la Silice, mais substantiellement pas de Bore ou d'oxyde de Bore, de Phosphore ou d'oxyde de Phosphore, ni de Bismuth ou d'oxyde de Bismuth, si ce n'est à l'état de traces ou d'impuretés. Elle peut comprendre éventuellement de l'oxyde d'Aluminium, ce qui présente l'avantage d'augmenter la stabilité et la durabilité du verre.

La composition selon l'invention n'est pas une composition de verre vitrocéramique. Elle ne comprend pas de phase cristalline présente sous la forme de cristaux dispersés au sein de la phase vitreuse.

La composition selon l'invention comprend en poids 58 à 64% de SiO₂, et moins de 0,5% de Al₂O₃, s'il est présent.

La composition comprend en outre un mélange d'oxydes d'alcalins et d'alcalino-terreux.

Le mélange d'oxydes d'alcalins consiste en 13,8 et 18 % en poids d'un mélange d'oxyde de Potassium (K₂O) et d'oxyde de Sodium (Na₂O). Il ne comprend pas d'autres oxydes de métaux alcalins, en particulier elle ne comprend pas d'oxydes de Lithium et/ou de Césium, si ce n'est à l'état de traces ou d'impuretés. De préférence, K₂O est présent entre 8 et 10% en poids, soit 6 à 9% en moles, et Na₂O est présent entre 5,8 et 8% en poids, soit 6 à 9,2% en moles. De préférence, le rapport des pourcentages molaires de K₂O / pourcentages molaires Na₂O est d'environ 1.

Les oxydes de Potassium et de Sodium sont des modificateurs du réseau vitreux et des fondants. En combinaison et dans les proportions selon l'invention, ils présentent l'avantage de maximiser leurs effets sur les propriétés thermiques du verre, d'abaisser la température de fusion de la base vitreuse, de réduire la viscosité du verre à haute température et de faciliter la clarification et l'homogénéisation, tout en limitant la corrosion des éléments réfractaires constituant le four lors de l'étape de fusion.

Le mélange d'oxydes d'alcalino-terreux consiste en 9 et 15% en poids d'un mélange d'oxyde de Baryum (BaO) et d'oxyde de Strontium (SrO). Il ne comprend pas d'autres oxydes de métaux alcalino-terreux, en particulier elle ne comprend pas d'oxydes de Calcium et/ou de Magnésium, si ce n'est à l'état de traces ou d'impuretés. De préférence, BaO est présent entre 8,5 et 12% en poids, soit 4 à 6% en moles, et SrO entre 0,5 et 3% en poids, soit 0,3 et 3% en moles. De préférence, le rapport des pourcentages molaires de BaO / pourcentages molaires de SrO est compris entre environ 2,7 et 11,5%.

L'oxyde de Baryum et l'oxyde de Strontium sont des stabilisants plus lourds que les oxydes de Calcium et de Magnésium classiquement utilisés. Ils présentent l'avantage d'augmenter la viscosité à chaud tout en augmentant la densité du verre obtenu et son indice de réfraction. En outre, ils améliorent la travaillabilité à chaud de la composition, en garantissant un palier de travail plus important. Dans les proportions selon l'invention, ils présentent l'avantage de d'amplifier leurs effets, sans avoir les inconvénients de l'oxyde de Baryum et l'oxyde de Strontium seul, à des telles teneurs.

Le rapport entre la somme des pourcentages molaires des oxydes alcalins et la somme des pourcentage molaires des oxydes d'alcalino-terreux, à savoir le rapport : (% en mol K₂O + % en mol Na₂O) / ((% en mol BaO + % en mol SrO), est compris entre environ 2 et environ 3. De préférence, ce rapport est égal à environ 2, 2,25, 2,5, 2,75, 2,79 ou 3. Avantageusement, ce rapport est égal à 2,5.

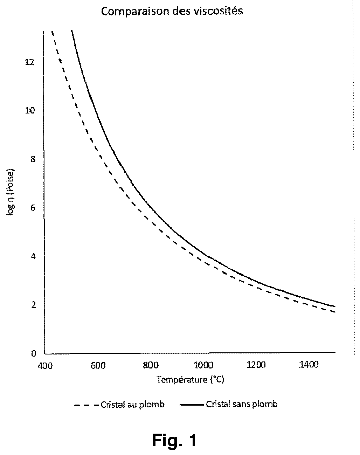

Un tel mélange d'oxydes d'alcalins et d'alcalino-terreux modifie le profil de viscosité, en particulier entre la température de mise en forme du verre, qui correspond à une viscosité de 10³ Poise, et la température de ramollissement, qui correspond à une viscosité de 10^{7,65} Poise, du verre à base de la composition selon l'invention par rapport à celui d'une composition d'un verre de type cristallin ou sodocalcique. Cela présente l'avantage d'obtenir un verre qui se fige moins vite et donc d'améliorer sa travaillabilité à chaud (figure 1).

La composition comprend en outre de l'oxyde de Zinc, mais ne comprend pas d'autres oxydes de la famille du Plomb, à part éventuellement de l'oxyde d'Étain. En tout état de cause, elle ne comprend pas d'oxydes de Bismuth, de Gallium, et/ou de Cadmium, si ce n'est à l'état de traces ou d'impuretés. L'oxyde de Zinc représente entre 6 et 10% en poids de la composition selon l'invention. Si l'oxyde d'Étain est présent, il peut l'être jusqu'à 2% en poids.

Dans la composition selon l'invention, l'oxyde de Zinc joue un rôle similaire à celui du Plomb dans un verre de cristal au Plomb. Il permet de stabiliser le verre à chaud, permet d'augmenter sa durabilité chimique à froid, et permet d'augmenter l'indice de réfraction du verre obtenu.

Cette combinaison des oxydes de Baryum, de Strontium et de Zinc présente l'avantage d'augmenter la stabilité du verre à chaud, en limitant la cristallisation.

La composition peut comprendre en outre de l'oxyde d'Antimoine, de préférence représentant entre 0 et 1,20% en poids. Cela présente l'avantage d'obtenir un verre homogène et sans bulle résiduelle. Il apporte également, pendant le procédé de fusion, de l'oxygène en excédant qui permet d'obtenir un verre oxydé plus facilement maîtrisable lors du procédé de fusion permettant notamment une certaine stabilité au niveau de la couleur.

De préférence, la composition peut comprendre en outre un ou plusieurs sulfates, en complément de l'oxyde d'antimoine, ce qui présente l'avantage d'oxyder le verre et d'agrandir la plage de température d'affinage pendant l'étape de fusion au-delà de la simple action de l'oxyde d'antimoine. Le ou les sulfates sont présents sous la forme de précurseurs tels que par exemple Na₂SO₄, K₂SO₄, SrSO₄, BaSO₄, et une combinaison de ceux-ci.

La composition peut comprendre en outre un oxyde d'un métal de transition, de préférence, de l'oxyde de Titane, de préférence représentant moins de 1% en poids. Cela présente l'avantage de diminuer la température de fusion du verre et d'augmenter l'indice de réfraction. L'oxyde de Titane peut aussi participer à la coloration du verre. Dans ce cas, la teneur peut représenter jusque 6,8% en poids.

La composition peut comprendre en outre un oxyde d'un Lanthanide, de préférence de l'oxyde de Lanthane, représentant 0 à 6%. Cela présente l'avantage d'alourdir la composition, d'augmenter la densité du verre, tout en conservant un indice de réfraction élevé et une bonne travaillabilité.

La composition peut comprendre en outre des agents colorants ou décolorants, de préférence pour masquer la teinte apportée par les impuretés ou bien pour obtenir des verres tintés. De préférence, la composition peut comprendre des oxydes métalliques tels que V₂O₅, Cr₂O₃, MnO, Fe₂O₃, CoO, NiO, CuO, SnO₂, des oxydes de lanthanide tels que CeO₂, Pr₂O₃, Nd₂O₃, Er₂O₃ ou encore des métaux précieux tels que Ag et Au.

De préférence, la composition ne comprend pas d'autres composants que ceux mentionnés précédemment. La composition est alors constituée de :
58 à 64 % en poids de SiO₂, 0 à 0,5% en poids d'Al₂O₃, 5,8 à 8% en poids de Na₂O, 8 à 10% en poids de K₂O, 8,5 à 12% en poids de BaO, de 0,5 à 3% en poids SrO, le rapport entre la somme des % molaires de Na₂O et de K₂O et la somme des % molaires de BaO et de SrO étant compris entre 2 et 3, de 6 à 10 % en poids de ZnO, 0 à 1,2% en poids de Sb₂O₃, 0 à 0,5% en poids de SO₃, 0 à 6,8% en poids de TiO₂, 0 à 6% en poids de La₂O₃ et 0 à 10% en poids d'agents colorants, la somme de ces composants représentant 100% du poids total de la composition.

Des exemples de compositions selon l'invention sont donnés dans les tableaux 1 et 2.

**Tableau 1**

| | **Oxydes** | **A** | **B** | **C** | **D** | **E** |
|---|---|---|---|---|---|---|
| | SiO₂ | 58,0 | 58,0 | 64,0 | 58,0 | 58,5 |
| **Composition** (%pds) | Al₂O3 | - | - | 0,5 | - | - |
| | Na₂O | 5,8 | 8,0 | 6,2 | 6,2 | 6,3 |
| | K₂O | 8,0 | 10,0 | 9,2 | 9,0 | 9,1 |
| | BaO | 8,5 | 12,0 | 10,3 | 10,0 | 10,4 |
| | SrO | 0,5 | 3,0 | 0,8 | 0,8 | 1,2 |
| | ZnO | 6,0 | 6,0 | 8,0 | 10, | 9,2 |
| | Sb₂O₃ | 0,8 | 1,2 | - | - | 1,0 |
| | SO₃ | - | - | - | - | - |
| | TiO₂ | 6,8 | 1,0 | - | - | 0,3 |
| | La₂O₃ | 3,0 | 0,8 | 1,0 | 6,0 | 4 |
| | CeO₂ | 2,6 | - | - | - | - |
| | CoO | - | - | - | - | - |
| | Cr₂O₃ | - | - | - | - | - |
| | CuO | - | - | - | - | - |
| | Fe₂O₃ | - | - | - | - | - |
| | SnO₂ | - | - | - | - | - |
| | | 100,0 | 100,0 | 100,0 | 100,0 | 100,0 |

**Tableau 2**

| | **Oxydes** | **F** | **G** | **H** | **I** | **J** |
|---|---|---|---|---|---|---|
| | SiO₂ | 62,6 | 61,0 | 58,0 | 58,1 | 58,7 |
| **Composition** (%pds) | Al₂O₃ | - | - | - | | 0,1 |
| | Na₂O | 6,4 | 5,9 | 5,8 | 6,2 | 6,7 |
| | K₂O | 8,8 | 9,0 | 8,9 | 9,2 | 9,3 |
| | BaO | 10,7 | 10,5 | 10,3 | 10,3 | 10,5 |
| | SrO | 2,6 | 2,5 | 2,5 | 0,8 | 1,0 |
| | ZnO | 7,4 | 7,3 | 7,2 | 8,5 | 8,9 |
| | Sb₂O₃ | 0,9 | 0,9 | 0,8 | 1,2 | 0,8 |
| | SO₃ | - | - | - | - | 0,5 |
| | TiO₂ | 0,6 | - | 0,6 | 0,2 | 0,3 |
| | La₂O₃ | - | 2,3 | 4,5 | 3,5 | 3,2 |
| | CeO₂ | - | - | - | - | - |
| | CoO | - | - | 0,1 | - | - |
| | Cr₂O₃ | - | 0,6 | 0,5 | - | - |
| | CuO | - | - | 0,4 | - | - |
| | Fe₂O₃ | - | - | 0,4 | - | - |
| | SnO₂ | - | - | - | 2,0 | - |
| | | 100,0 | 100,0 | 100,0 | 100,0 | 100,0 |

La composition selon l'invention doit s'entendre comme le mélange des composants, ou matières premières, qui la compose, et qui sont mis à fondre dans un four. La masse fondue, et donc le verre à base, ou obtenus à partir, de la composition selon l'invention, ne comprennent plus les matières premières de la composition en tant que telles, mais les produits de leur réaction. Par ailleurs, la masse fondue et le verre peuvent comprendre en outre des contaminants, des minéraux ou oxydes de minéraux, provenant de contaminations ayant lieu durant le procédé d'obtention de la masse fondue et du verre, par exemple durant le séjour dans le four. Par exemple, la masse fondue et le verre obtenu peuvent comprendre du Zirconium ou de l'oxyde de Zirconium, provenant des éléments réfractaires du four, qui peut représenter jusqu'à 1% en poids de la masse totale des matières premières de la composition.

La composition selon l'invention présente l'avantage de pouvoir être mise en œuvre en utilisant les techniques, les outils et en particulier les fours, employés pour la réalisation d'un verre de cristal au Plomb et les articles en verre de cristal au Plomb.

La composition selon l'invention est utilisée pour la réalisation du verre de cristal sans Plomb selon l'invention.

Le verre de cristal sans plomb selon l'invention est obtenu à partir de la composition selon l'invention. Il peut s'agir d'un verre silicate ou aluminosilicate, mais il n'est pas un verre alumino-boro-silicate. Il présente des propriétés physiques et mécaniques identiques, équivalentes ou voisines, à celles d'un verre de cristal au Plomb, ainsi qu'une sonorité équivalente.

Le verre de cristal sans plomb selon l'invention possède un indice de réfraction, mesuré à l'aide d'un réfractomètre d'Abbe, qui est compris entre 1,537 et 1,559, un nombre d'Abbe compris supérieur à 42, de préférence compris entre 54 et 56.

Il possède une densité comprise entre 2,77 et 3,03, de préférence entre 2,70 et 2,90.

Le verre de cristal sans Plomb selon l'invention présente un indice de réfraction compris entre 1,537 et 1,559 et une densité comprise entre 2,77 et 3,03.

Le verre de cristal sans Plomb selon l'invention présente une dureté de Vickers Hv0,1 supérieure ou égale à 436 kg/mm², de préférence comprise entre 526 et 549 kg/mm².

Il présente une élasticité caractérisée par un module de Young supérieur à 59 GPa, de préférence entre 66 et 69,5 GPa.

Il présente une résistance hydrolytique, mesuré d'après la norme ISO719, comprise entre 122 et 132 *µ*g/g exprimée en R₂O.

Le verre de cristal sans Plomb selon l'invention est utilisé pour la réalisation d'un article de cristal sans plomb. Le verre est façonné afin de lui conférer une forme, une texture de surface, une ou des gravures, particulières qui sont fonction de l'usage final et/ou la destination finale de l'article. Le verre de cristal sans Plomb peut également, éventuellement, être revêtu d'un ou plusieurs décors. De par ces modifications, le verre devient un article en verre de cristal sans Plomb.

L'article en verre de cristal sans Plomb selon l'invention est fait, ou comprend, le verre de cristal sans Plomb selon l'invention, et un ou plusieurs revêtements de métaux et/ de métaux précieux et/ou de polymères, déposés sur un substrat fait du verre, ou comprenant le verre, selon l'invention, une ou plusieurs gravures, une ou plusieurs texturations de surface, ou une combinaison de ceux-ci.

L'article en verre de cristal sans Plomb selon l'invention est de préférence un bijou artificiel, un article des arts de la table, comme de la vaisselle, une décoration, un élément d'éclairage, un élément d'ornement et de décoration.

## Revendications

1. Composition de verre de cristal sans Plomb comprenant :
58 à 64% en poids de SiO₂,
0 à 0,5% en poids de Al₂O₃,
un mélange d'oxydes d'alcalins et d'alcalino-terreux consistant en : 13,8 à 18 % en poids d'un mélange d'oxydes d'alcalins consistant en K₂O et Na₂O, et 9 à 15 % en poids d'un mélange d'oxydes d'alcalino-terreux consistant en BaO et SrO, le rapport entre le pourcentage molaire du mélange d'oxydes d'alcalins et le pourcentage molaires du mélange d'oxydes d'alcalino-terreux étant compris entre environ 2 et environ 3,
6 à 10% en poids de ZnO,
0 à 1,20% en poids de Sb₂O₃,
0 à 0,5% en poids de SO₃,
0 à 6,8% en poids de TiO₂,
0 à 6% en poids de La₂O₃ et
0 à 10% d'agents colorants ou décolorants.

2. La composition selon la revendication 1, dans laquelle le mélange d'oxydes d'alcalins consiste en 8 à 10% en poids de K₂O et 5,8 à 8% en poids de Na₂O.

3. La composition selon l'une quelconque des revendications précédentes, dans laquelle le mélange d'oxydes d'alcalino-terreux consiste en 8,5 à 12% en poids de BaO et 0,5 à 3% en poids de SrO.

4. La composition selon l'une quelconque des revendications précédentes, dans laquelle le rapport entre le pourcentage molaire du mélange d'oxydes d'alcalins et le pourcentage molaires du mélange d'oxydes d'alcalino-terreux est égal à environ 2.

5. La composition selon les revendications 1 à 3, dans laquelle le rapport entre le pourcentage molaire du mélange d'oxydes d'alcalins et le pourcentage molaires du mélange d'oxydes d'alcalino-terreux est égal à environ 2,5.

6. Utilisation de la composition selon l'une quelconque des revendications pour la réalisation d'un verre de cristal sans Plomb.

7. Verre de cristal sans Plomb à base de la composition selon l'une quelconque des revendications 1 à 5.

8. Verre de cristal sans Plomb selon la revendication 7, ayant un indice de réfraction compris entre 1,537 et 1,559 et une densité comprise entre 2,77 et 3,03.

9. Utilisation du verre en cristal sans Plomb selon l'une quelconque des revendications 7 ou 8 pour réaliser un article en verre de cristal sans Plomb.

10. Article de cristal sans Plomb fait, ou comprenant, le verre selon les revendications 7 ou 8.

11. L'article de cristal sans Plomb selon la revendication 10, étant un article des arts de la table, un article de décoration, un bijou, un élément d'un luminaire ou un luminaire.
